# EUROPEAN PATENT APPLICATION

(11) **EP 3 163 893 A1**
(43) Date of publication of application: **03.05.2017**
(21) Application number: 16190123.6
(22) Date of filing: 22.09.2016
(51) Int. Cl.: H04N 21/4363

(54) **METHOD AND APPARATUS FOR PROVIDING CONTENTS BY USING BEACON SIGNAL**

(30) Priority: 29.10.2015 KR 20150151331
(71) Applicant: SK Planet Co., Ltd., Seongnam-si, Gyeonggi-do 13487 (KR)
(72) Inventor: WOO, Jongwon, 21324 Incheon (KR)
(74) Representative: Thorniley, Peter

(57) **Abstract**

A method and apparatus are allowed to provide contents by using a beacon signal. A set-top box flexibly changes identification information contained in the beacon signal depending on a current broadcast program and its proceeding time point, and then emits the beacon signal for a given time span. A terminal device receives the beacon signal and then receives particular content corresponding to the identification information from a content server. It is therefore possible to provide various contents to a user without disturbing a user's TV watching.

## Description

### TECHNICAL FIELD

The present invention relates generally to a method and apparatus for providing contents by using a beacon signal. Particularly, the present invention relates to a method and apparatus for providing contents, such as a bidirectional advertisement of IPTV, through a terminal device which receives a beacon signal when a set-top box for offering an IPTV service transmits the beacon signal through a beacon module.

### BACKGROUND

Contrary to typical analog broadcasting, a recent digital TV system realizes bidirectional or interactive TV broadcasting and is thus useful to provide additional information.

Digital broadcasting uses the format of MPEG2 transport stream (MPEG2-TS) to combine content, provided by a content provider (CP), with audio and video created by a broadcasting station. Such digital broadcasting is received at a set-top box (STB), and users (or viewers) can watch desired broadcasting though a digital TV screen.

Meanwhile, data broadcasting refers to a technical concept capable of a highspeed transmission of documents, still images, graphics, audios, videos, and/or software products to personal computers (PCs), STBs, mobile communication devices, and any other electronic device. Through a radio network, data broadcasting can not only offer program-related information and any other information such as weather, stock, news, etc., but also allow Internet access, electronic commerce, and the like.

Such data broadcasting is a new type of broadcasting for sending digital signals through airwaves, enabling a receiving device to automatically decode and process received data, and directly offering the processed data to users or controlling other devices or units through the processed data. In view of digital transmission of audio and video, the data broadcasting is similar to digital broadcasting.

Normally the data broadcasting uses multiplexing of data signals with radio or television broadcast programs. However, in some cases, the data broadcasting may transmit independent information separately from digital signals associated with broadcast programs.

Therefore, the data broadcasting is a multimedia-type information providing service that combines an advantage of wireless transfer system utilizing radio waves and a bidirectional function of Internet.

Such a digital TV system has the ability to offer bidirectional or interactive TV broadcasting and is widely utilized for an advertising marketing by exposing, to a TV screen, an advertisement or the like associated with a current broadcast program or scene or expected to arise viewer's interest.

However, according to such an advertising marketing technique, content such as an advertisement is displayed on a part of the TV screen and thereby partially hides scenes of a current broadcast program. Unfortunately, this causes a problem of disturbing a user's TV watching. Further, because of having to use only a part of the TV screen, there is a restriction in organizing content.

It is therefore required to provide a content service such as an advertisement with no restriction of a content area without disturbing a user's TV watching.

### SUMMARY

Accordingly, in order to address the aforesaid or any other issue, the present invention proposes a method and apparatus for providing various contents such as advertisements with no restriction of a content area without disturbing a user's TV watching in bidirectional digital TV broadcasting such as IPTV.

In view of the foregoing, the present invention intends to offer a method and apparatus capable of providing various content services by enabling a set-top box to receive a content code corresponding to a specific broadcast program and a specific beacon signal emission time point from a content server, to change identification information based on the content code, and to emit a beacon signal containing the changed identification information at the specific beacon signal emission time point, and also by enabling one or more terminal devices that receive the beacon signal to receive particular content corresponding to the content code from the content server and to offer the received content to a user.

The present invention is not limited to the above object, and any other object, even though not mentioned herein, may be well understood from the following description.

A method for providing contents according to the present invention may comprise steps of, at a set-top box, receiving a content code corresponding to a specific broadcast program and a specific beacon signal emission time point from a content server, setting identification information based on the content code, and emitting a beacon signal containing the identification information at the specific beacon signal emission time point.

In this method, the identification information may include first identification information for indicating a location or region of the set-top box and second identification information for indicating a service to be provided at the location or region, and the setting step may include setting the second identification information. Additionally, the content code may include emission time span information for indicating an emission time span of the beacon signal, and the emitting step may include emitting the beacon signal during the emission time span.

In this method, the identification information may include at least one of location information of the set-top box and user information of a user of the set-top box. Additionally, the identification information may include first identification information for indicating a location or region of the set-top box and second identification information for indicating a service to be provided at the location or region, and the location information and the user information may be set in the first identification information.

In this method, the content code may be mapped to a specific URL (Uniform Resource Locator) address.

Meanwhile, a computer-readable storage medium recording thereon a program for executing the above method may be provided. Also, a computer program configured to execute the above method and stored in a computer-readable storage medium may be provided.

A set-top box according to the present invention may comprise a beacon module configured to emit a beacon signal, a communication module connected to a communication network and configured to transmit or receive data to or from a content server through the communication network, and a control module configured to receive a content code corresponding to a specific broadcast program and a specific beacon signal emission time point from the content server through the communication module, to set identification information based on the content code, and to control the beacon module to emit a beacon signal containing the identification information at the specific beacon signal emission time point.

In this set-top box, the identification information may include first identification information for indicating a location or region of the set-top box and second identification information for indicating a service to be provided at the location or region, and the control module may be further configured to set the second identification information based on the content code. Additionally, the content code may include emission time span information for indicating an emission time span of the beacon signal, and the control module may be further configured to control the beacon module to emit the beacon signal during the emission time span.

In this set-top box, the identification information may include at least one of location information of the set-top box and user information of a user of the set-top box. Additionally, the identification information may include first identification information for indicating a location or region of the set-top box and second identification information for indicating a service to be provided at the location or region, and the control module is further configured to set the location information and the user information in the first identification information.

In this set-top box, the content code may be mapped to a specific URL (Uniform Resource Locator) address.

A beacon apparatus according to the present invention may comprise a first communication module configured to emit a beacon signal, a second communication module connected to a communication network and configured to transmit or receive data to or from a set-top box through the communication network, and a control module configured to receive a control signal for setting identification information based on a content code from the set-top box through the second communication module, to set the identification information based on the control signal, and to control the first communication module to emit a beacon signal containing the identification information at a specific beacon signal emission time point.

In this beacon apparatus, the content code may include emission time span information for indicating an emission time span of the beacon signal, and the control module may be further configured to control the first communication module to emit the beacon signal during the emission time span.

According various embodiments of the present invention, by enabling the set-top box to flexibly change the identification information contained in the beacon signal depending on a current broadcast program and its proceeding time point and then to emit the beacon signal for a given time span, and also by enabling the terminal device receiving the beacon signal to receive particular content corresponding to the identification information from the content server and then to offer the user, it is possible to provide various contents to the user without disturbing a user's TV watching.

Additionally, the use of the beacon signal allows the terminal device to receive contents without any pairing or bonding between the set-top box and the terminal device. Therefore, the terminal device located within the emission range of the beacon signal from the set-top box, even though not registered in the set-top box, can be offered contents from IPTV operators.

Further, this allows a plurality of users residing within the beacon signal emission range to be offered contents through their terminal devices simultaneously and individually. Moreover, the use of user information allows the transmission of personalized content to each individual user, thus enhancing a marketing efficiency of advertisements or the like.

Other various advantages and effects will be disclosed explicitly or implicitly in embodiments of this invention to be described below in detail.

### BRIEF DESCRIPTION OF THE DRAWINGS

FIG. 1 is a schematic diagram illustrating a system for providing contents according to an embodiment of the present invention.
FIG. 2 is a block diagram illustrating main elements of a set-top box according to an embodiment of the present invention.
FIG. 3 is a flow diagram illustrating an operation process of a set-top box according to an embodiment of the present invention.
FIGS. 4A and 4B are diagrams illustrating a data structure of a beacon signal according to an embodiment of the present invention.
FIG. 5 is a schematic diagram illustrating a system for providing contents according to another embodiment of the present invention.
FIG. 6 is a block diagram illustrating main elements of a set-top box according to another embodiment of the present invention.
FIG. 7 is a block diagram illustrating main elements of a beacon apparatus according to another embodiment of the present invention.
FIG. 8 is a flow diagram illustrating an operation process of a set-top box and a beacon apparatus according to another embodiment of the present invention.
FIG. 9 is a block diagram illustrating main elements of a terminal apparatus according to an embodiment of the present invention.
FIG. 10 is a flow diagram illustrating an operation process of a terminal apparatus according to an embodiment of the present invention.
FIG. 11 is a block diagram illustrating main elements of a content server according to an embodiment of the present invention.
FIG. 12 is a flow diagram illustrating an operating process of a content server according to an embodiment of the present invention.
FIGS. 13 and 14 are exemplary diagrams illustrating a content provision method according to embodiments of the present invention.
FIG. 15 is a block diagram illustrating an operating environment of a content provision system according to an embodiment of the present invention.

### DETAILED DESCRIPTION

Now, embodiments of the present invention will be described with reference to the accompanying drawings.

In the following description and the accompanying drawings, however, well known techniques may not be described or illustrated in detail to avoid obscuring the subject matter of the present invention. Through the drawings, the same or similar reference numerals denote corresponding features consistently.

The terms and words used in the following description and drawings are not limited to the bibliographical meanings and are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

The expression "1", "2", "first", or "second" used in various embodiments of this disclosure may modify various components of such embodiments but does not limit the corresponding components. The above expressions do not limit the sequence and/or importance of the components but may be used for distinguishing one component from other components. For example, a first device and a second device indicate different devices although both of them are devices. Meanwhile, without departing from the scope of the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of this disclosure are only examples for describing a specific embodiment but do not limit such embodiments. Singular forms are intended to include plural forms unless the context clearly indicates otherwise. Unless defined differently, all terms used herein, which include technical terminologies or scientific terminologies, have the same meaning as that understood by a person skilled in the art to which the present disclosure belongs. The terms "include", "comprise", and "have" as well as derivatives thereof, mean inclusion without limitation.

Embodiments within the scope of the present invention include computer-readable media for carrying or having computer-executable instructions or data structures stored thereon. Such computer-readable media may be any available media, which is accessible by a general-purpose or special-purpose computer system.

By way of example, and not limitation, such computer-readable media can comprise physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system.

In this description and in the following claims, a "network" is defined as one or more data links (of possibly different speeds) that enable the transport of electronic data between computer systems and/or modules (e.g., hardware and/or software modules). When information is transferred or provided over a network or another communications connection (either hardwired, wireless, or a combination of hardwired or wireless) to a computer system, the connection is properly viewed as a computer-readable medium. Computer-executable instructions include, for example, instructions and data which cause a general-purpose computer system or special-purpose computer system to perform a certain function or group of functions. The computer executable instructions may be, for example, binaries, intermediate format instructions such as assembly language, or even source code.

Although not required, the invention is described in the general context of computer-executable instructions, such as program modules, being executed by a computer, such as a client workstation or a server. Generally, program modules include routines, programs, objects, components, data structures and the like that perform particular tasks or implement particular abstract data types. Moreover, it should be appreciated that the invention and/or portions thereof may be practiced with other computer system configurations, including hand-held devices, multi-processor systems, microprocessor-based or programmable consumer electronics, network PCs, minicomputers, mainframe computers and the like. The invention may also be practiced in distributed computing environments where tasks are performed by remote processing devices that are linked through a communications network. In a distributed computing environment, program modules may be located in both local and remote memory storage devices.

Hereinafter, a content provision method using beacon technology according to this invention will be described on the basis of data communication technology using Bluetooth low energy (BLE) technique.

While near field communication (NFC) technique is available only within several centimeters, Bluetooth technique is available within the range of several meters and is thus widely utilized in various fields. Further, unlike NFC, Bluetooth technique requires no tagging onto a reader and allows the delivery of data in response to a mere approach or passage to or through a beacon device. In addition, Bluetooth technique is helpful in reading indoor locations and delivering customized data.

This invention is, however, not limited to Bluetooth or BLE only and may further or alternatively employ any other short range communication technique, based on a personal area network (PAN), such as Zigbee, ultra wideband (UWB), ANT, Wi-Fi, NFC, or the like.

Now, various embodiments of the present invention will be described with reference to the accompanying drawings.

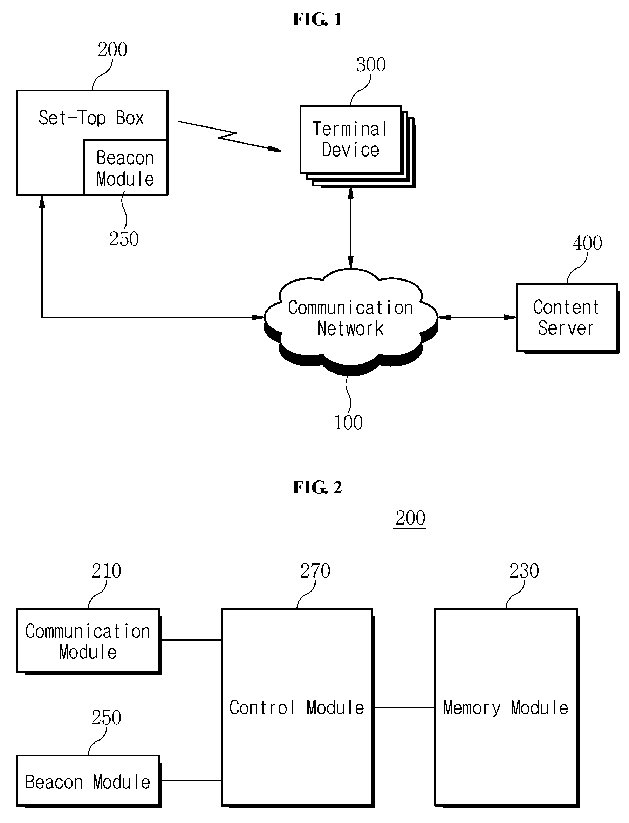

FIG. 1 is a schematic diagram illustrating a system for providing contents according to an embodiment of the present invention.

Referring to FIG. 1, the content provision system may include a set-top box 200, at least one terminal device 300, and a content server 400.

The set-top box 200 may include a beacon module 250 that emits a beacon signal. Although the set-top box 200 emits beacon signals using BLE communication technique, this is exemplary only and not to be construed as a limitation. As mentioned above, any other short range communication technique may be alternatively applied.

The set-top box 200 is connected to and interworks with the content server 400 through a communication network 100. Similarly, the terminal device 300 is connected to and interworks with the content server 400 through the communication network 100.

Hereinafter, each element will be described in detail with reference to FIG. 1.

The communication network 100 performs a function to deliver data for transmission and reception of data between the set-top box 200 and the content server 400 and between the terminal device 300 and the content server 400. The communication network 100 may use wireless communication technique such as, but not limited to, WLAN (Wireless Local Access Network), Wi-Fi, Wibro, Wimax, HSDPA (High Speed Downlink Packet Access), LTE (Long Term Evolution), LTE-A (LTE-Advanced), or the like. Alternatively or additionally, depending on system types, the communication network 100 may use wired communication technique such as Ethernet, xDSL (ADSL, VDSL), HFC (Hybrid Fiber Coaxial cable), FTTC (Fiber To The Curb), FTTH (Fiber To The Home), or the like.

Additionally, the communication network 100 includes a plurality of access networks (not shown) and a core network (not shown), and may further include an external network, e.g., Internet (not shown). Here, the access network is to perform wired/wireless communication with the terminal device 300 and may be formed of a plurality of base stations, also referred to as BTS (Base Transceiver Station), NodeB, or eNB (eNodeB or evolved Node B), and controllers such as BSC (Base Station Controller) and RNC (Radio Network Controller). Additionally, instead of such a base station that includes a digital signal processor and a radio signal processor, a plurality of radio units (not shown) corresponding to the radio signal processor may be disposed respectively at a plurality of regions and connected to a centralized digital unit (not shown) corresponding to the digital signal processor.

The core network which forms a mobile network together with the access network performs a function to connect the access network and the external network such as Internet.

The core network is a network system that performs main functions for a mobile communication service such as mobility control and switching between the access networks. Namely, the core network performs circuit switching or packet switching and further manages and controls a packet flow in the mobile network.

In addition, the core network may manage mobility between frequencies, control traffic therein and in the access network, and control interworking with other network such as Internet. The core network may be formed of SGW (Serving GateWay), PGW (PDN GateWay), MSC (Mobile Switching Center), HLR (Home Location Register), MME (Mobile Mobility Entity), HSS (Home Subscriber Server), and/or the like.

The Internet is a world common network through which information is exchanged according to TCP/IP protocol. The Internet is connected to the set-top box 200 and the terminal device 300 and may deliver information, offered from the set-top box 200 and the terminal device 300, to the content server 400 through the core network and the access network. Similarly, the Internet may deliver information, offered from the content server 400, to the set-top box 200 and the terminal device 300 through the core network and the access network. This is, however, exemplary only and not to be construed as a limitation. Alternatively, the content server 400 may be integrated with the core network.

In addition to the above-discussed communication technique, any other communication technique well known in the art or to be developed may be used for this invention.

The set-top box 200 has a communication function required for using a bidirectional multimedia communication service such as IPTV. Also, the set-top box 200 has normally a data storage unit for storing broadcast contents, content selection menu data such as EPG (Electronic Program Guide), advertisement data, data associated with a bidirectional multimedia communication service, and the like.

The set-top box 200 is offered to the user and connected to a screen of IPTV. Additionally, the set-top box 200 is connected to the content server 400, equipped at the broadcasting station, through the communication network 100 so as to receive digital broadcasting signals on various channels with internet protocol (IP) from the content server 400 and also offer a broadcast program of a specific channel, selected by the user, to the user through the IPTV screen.

Particularly, the set-top box 200 includes the beacon module 250 capable of emitting a beacon signal. The beacon module 250 is equipped as an internal or external type in the set-top box 200 and periodically emits a beacon signal.

The beacon signal may contain beacon identification information, such as device information or location information, allocated to the beacon module 250. Such beacon identification information is the basis used for the terminal device 300 to use a beacon service.

The set-top box 200 may receive, from the content server 400, a content code corresponding to a specific broadcast program and a specific beacon signal emission time point. When the content code is received, the set-top box 200 may set, based on the received content code, the identification information contained in the beacon signal and then emit the beacon signal at the specific beacon signal emission time point.

The identification information may include set-top box identification information of the set-top box 200 and user information of the user using the set-top box 200. The user information may be the basis used for the terminal device 300 to receive personalized contents from the content server 400.

The content code may contain emission time span information for indicating an emission time span of the beacon signal. The set-top box 200 may emit the beacon signal during the emission time span.

The content code may be mapped to a specific URL (Uniform Resource Locator) address. The content server 400 may transmit, to the terminal device 300, specific content corresponding to the specific URL address.

The terminal device 300 according to an embodiment of this invention may perform voice or data communication through the communication network 100, transmit or receive information to or from the content server 400 through the communication network 100, and receive information from the set-top box 200 through beacon-based communication.

For the above, the terminal device 300 may include a memory for storing programs and protocols for transmitting, receiving and processing the beacon signal, a microprocessor for executing and controlling various programs, and the like.

The terminal device 300 may perform the access to any application provider (not shown) such as App Store on the communication network 100, receive a beacon service application from the application provider, and install the beacon service application for receiving a beacon signal and showing content corresponding to the beacon signal. The terminal device 300 may execute the beacon service application, extract beacon identification information from the beacon signal, and transmit the beacon identification information to the content server 400.

The terminal device 300 may be implemented in various forms.

For example, the terminal device 300 disclosed herein may be a mobile device such as a smart phone, a tablet PC, a PDA (Personal Digital Assistant), a PMP (Portable Multimedia Player), an MP3 player, and the like, or a stationary device such as a smart TV, a desktop computer, and the like.

Additionally, according to a recent trend of convergence in digital devices, a great variety of mobile devices or their equivalences may be used as the terminal device 300 in the present invention. Furthermore, any device that allows a beacon service application to be downloaded and installed may be used as the terminal device 300 in embodiments of this invention.

Meanwhile, the terminal device 300 that receives a beacon signal from the set-top box 200 may transmit identification information contained in the beacon signal to the content server 400 through the communication network 100. Then the content server 400 may transmit specific content corresponding to the received identification information to the terminal device 300.

The terminal device 300 may transmit device information thereof, together with the identification information, to the content server 400. Then, based on the identification information and device information, the content server 400 may select the most suitable content for the user of the terminal device 300 and then transmit the selected content to the terminal device 300.

Namely, it is possible to offer personalized content to the user of the terminal device 300 and thereby maximize the efficiency of content consumption.

For such maximization, when selecting suitable content to be offered to the user of the terminal device 300, the content server 400 may further consider user information of the set-top box 200 as well as the identification information and the device information.

The device information, transmitted from the terminal device 300 to the content server 400, may include information associated with sex, age preference, etc. of the user of the terminal device 300. The content server 400 may select content by extracting information about the user from database thereof, based on MAC address, etc. offered by the terminal device 300.

The content server 400 that selects specific content on the basis of at least one kind of information offered by the terminal device 300 may transmit the selected content to the terminal device 300. Then the terminal device 300 may offer the received content to the user.

In view of hardware, the content server 400 according to an embodiment of this invention has the same configuration as a typical web server or network server.

However, in view of software, the content server 400 includes a program module having codes written in computer languages such as C, C++, Java, Visual Basic, Visual C, and the like.

Meanwhile, a memory unit equipped in each apparatus disclosed herein is configured to store information in such an apparatus. In various embodiments, the memory unit is a computer-readable storage medium. In one embodiment, the memory unit may be a volatile memory unit. In another embodiment, the memory unit may be a nonvolatile memory unit. In some embodiments, the memory unit or storage unit may be a hard disk, an optical disk, and/or any other mass storage device.

In addition, the term "module" used herein may refer to a component or device which is formed of software, hardware, or combination thereof, and performs certain tasks. A module may be configured to reside on an addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

Although this description and drawings illustrate exemplary device elements, the subject matters and functional operations disclosed herein may be implemented by different type digital electronic circuits or implemented by computer software, firmware or hardware including a structure disclosed herein and structural equivalent thereof, or any combination thereof. The subject matters disclosed herein may be implemented by at least one computer program product, namely at least one module regarding computer program commands encoded on a program storage medium so as to control the operation of a device according to this invention or allow execution thereby.

A computer-readable medium may be a machine-readable storage device, a machine-readable storage board, a memory device, a machine-readable composition of material affecting wave-type signaling, or a combination thereof.

Now, main elements and an operation process of the set-top box 200 according to an embodiment of this invention will be described with reference to FIGS. 2 to 4B.

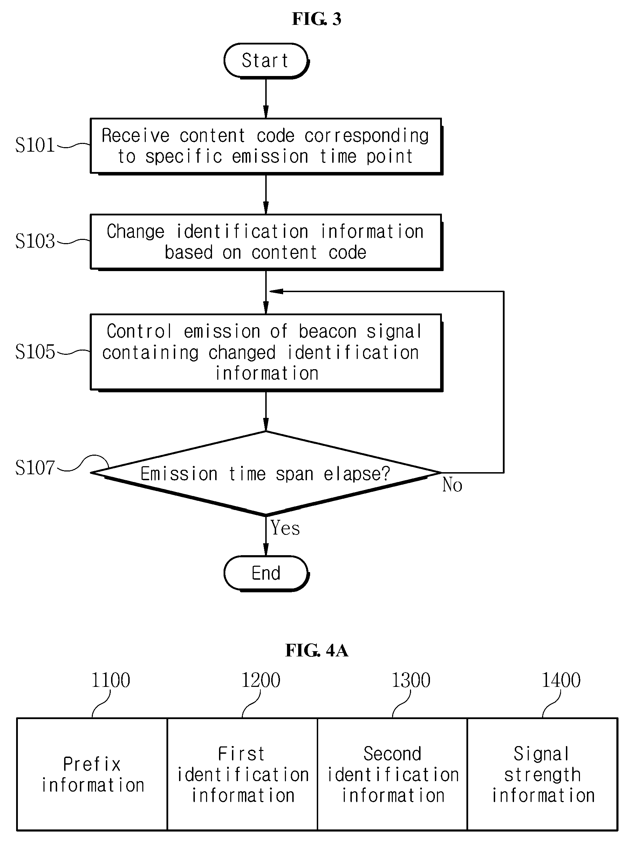

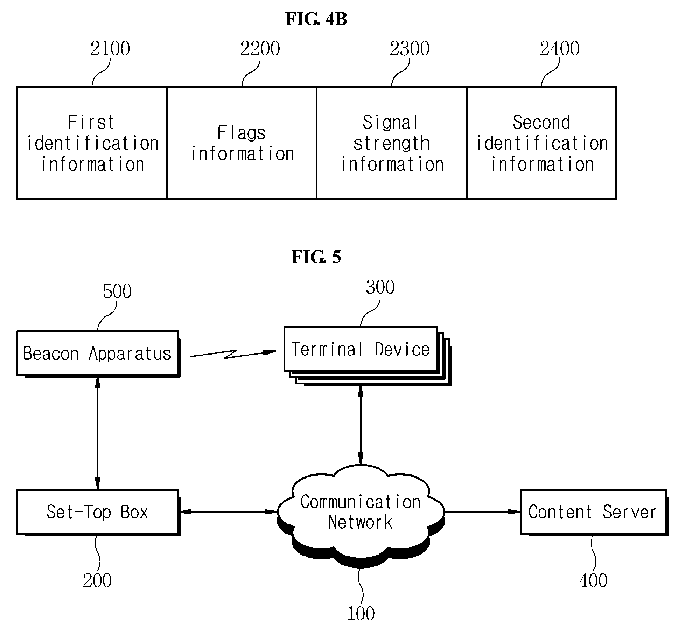

FIG. 2 is a block diagram illustrating main elements of a set-top box according to an embodiment of the present invention. FIG. 3 is a flow diagram illustrating an operation process of a set-top box according to an embodiment of the present invention. FIGS. 4A and 4B are diagrams illustrating a data structure of a beacon signal according to an embodiment of the present invention.

Referring first to FIG. 2, the set-top box 200 may include a communication module 210, a memory module 230, a beacon module 250, and a control module 270.

The communication module 210 may transmit or receive data to or from the content server 400 through the communication network 100. Particularly, the communication module 210 may receive information about a content code and an emission time point.

The communication module 210 may include an RF transmitter which up-converts the frequency of an outgoing signal and then amplifies the signal, an RF receiver which amplifies with low-noise an incoming signal and down-converts the frequency of the signal, a data processor for processing a communication protocol based on a specific communication scheme, and the like. The communication module 210 may include at least one wireless communication module (not shown) and/or at least one wired communication module (not shown).

The wireless communication module may be configured for transmission and reception based on a particular wireless communication scheme. In case of using wireless communication, the set-top box 200 may transmit or receive data to or from the content server 400 by using one of a wireless network communication module, a WLAN communication module, and a WPAN communication module.

The communication module 210 may use wireless communication technique such as, but not limited to, WLAN (Wireless Local Access Network), Wi-Fi, Wibro, Wimax, HSDPA (High Speed Downlink Packet Access), or the like. Alternatively or additionally, depending on system types, the communication module 210 may use wired communication technique such as Ethernet, xDSL (ADSL, VDSL), HFC (Hybrid Fiber Coaxial cable), FTTC (Fiber To The Curb), FTTH (Fiber To The Home), or the like.

The memory module 230 is a device for storing data and includes a main memory unit and an auxiliary memory unit. Further, the memory module 230 stores a program required for the operation of the set-top box 200. The memory module 230 may include mainly a program region and a data region. When any function is activated in response to a user's request, the set-top box 200 executes a relevant application and offers a particular function under the control of the control module 270.

The beacon module 250 is a device for periodically emitting a beacon signal. As discussed above, the beacon module 250 may emit a beacon signal through a PAN-type communication including Bluetooth.

Particularly, the beacon module 250 may emit a beacon signal containing identification information which is set by the control module 270.

The control module 270 may be a processor for triggering and operating each element of the set-top box 200.

The control module 270 controls the whole operations of the set-top box 200. Such operations of the step-top box 200 are shown in FIG. 3.

When the set-top box 200 receives a content code corresponding to a specific broadcasting program and a specific beacon signal emission time point through the communication module 210 (step S101), the set-top box 200 sets identification information, based on the received content code (step S103).

The identification information may include first identification information for indicating a location or region of the set-top box 200 and second identification information for indicating a service to be provided at the location or region. This will be described now with reference to FIGS. 4A and 4B.

FIGS. 4A and 4B are diagrams illustrating a data structure of a beacon signal according to an embodiment of the present invention.

Referring to FIG. 4A, the beacon signal may be formed of prefix information 1100, first identification information 1200, second identification information 1300, and signal strength information 1400.

The prefix information 1100 indicates the beginning of beacon information. The first identification information 1200 may be UUID (Universally Unique Identifier) that indicates a location or region of the set-top box 200. The second identification information 1300, which is on a lower level than the first identification information 1200, may be what is called Major ID or Minor ID which is mapped to information about a service to be provided at the location or region of the set-top box 200. Namely, among one or more kinds of identification information mapped to an application, the first identification information may be on the uppermost level.

Referring to FIG. 4B, the beacon signal may be formed of first identification information 2100, flag information 2200, signal strength information 2300, and second identification information 2400.

The first identification information 2100 is specific identification information, e.g., UUID (Universally Unique Identifier), mapped to the location or region of the set-top box 200 or to a service target. The second identification information 2400 indicates a location for storing service information and may be access address information such as URL or URI address information.

The set-top box 200 may set or change the second identification information 1300 or 2400, based on the received content code. Additionally, using the second identification information 1300 or 2400, the content server 400 may select specific content to be transmitted to the terminal device 300.

The first identification information 1200 or 2100 may further include user information about the user of the set-top box 200 as well as information about the location or region of the set-top box 200. The content server 400 that receives the first identification information 1200 or 2100 may select personalized content on the basis of the received first identification information 1200 or 2100 and then transmit the selected content to the terminal device 300.

The above-discussed data structures of a beacon signal are exemplary only and not to be construed as a limitation. Depending on purposes and types of the set-top box 200, a beacon signal may have various data structures.

Returning to FIG. 3, the set-top box 200 that changes the identification information on the basis of the content code may control the beacon module 250 to emit a beacon signal containing the changed identification information (step S105).

The content code may include emission time span information for indicating an emission time span of the beacon signal. In this case, the set-top box 200 may emit the beacon signal during the emission time span.

The set-top box 200 may determine whether the emission time span elapses (step S107). If the emission time span elapses, the set-top box 200 may stop the emission of the beacon signal. If the emission time span does not elapse, the set-top box 200 may continuously and periodically emit the beacon signal.

The content code is the basis used for offering specific content to the terminal device 300 and thus may be mapped to a specific URL address to be offered to the terminal device 300. Such a URL address may include an image URL, a video URL, a webpage URL, and the like.

Meanwhile, the URL address may be set in various manners, depending on the data structure of the beacon signal. In case of an embodiment as shown in FIG. 4A, an identification code formed of numerals, letters, symbols, etc. mapped to a specific URL address is set to the second identification information 1300. In case of another embodiment as shown in FIG. 4B, a specific URL address may be set as access address information to the second identification information 2400.

Described heretofore are main elements and an operation process of the set-top box 200 according to an embodiment of this invention.

Now, a content provision system according to another embodiment of this invention will be described.

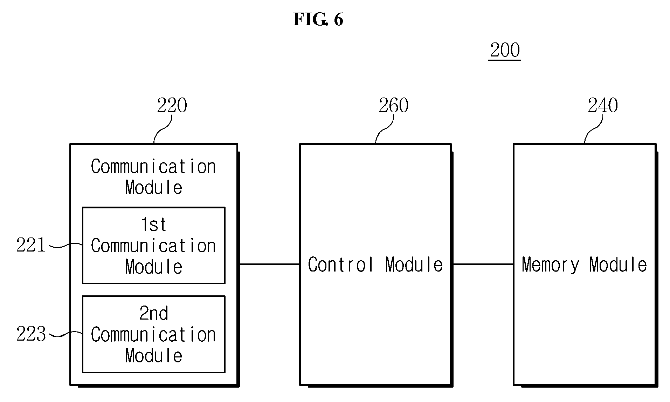

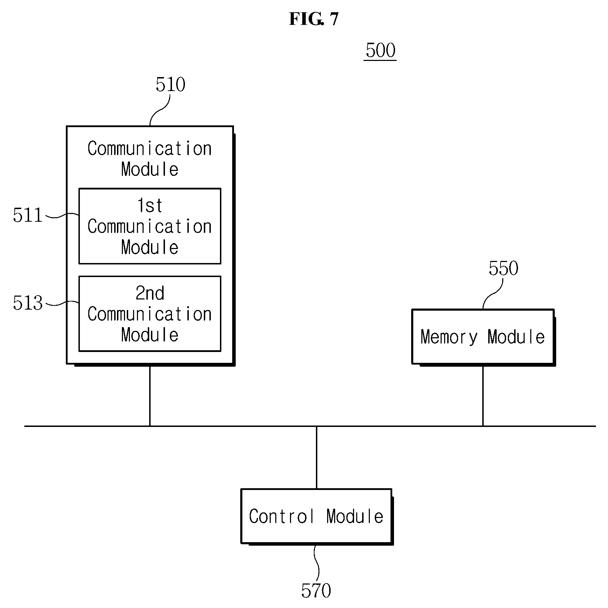

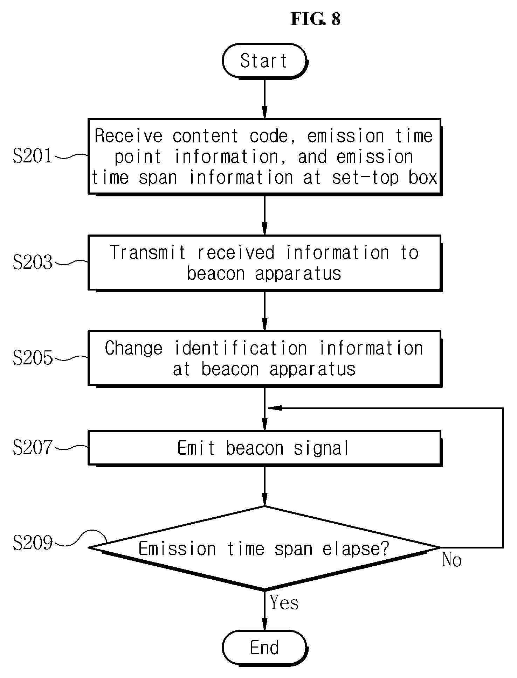

FIG. 5 is a schematic diagram illustrating a system for providing contents according to another embodiment of the present invention. FIG. 6 is a block diagram illustrating main elements of a set-top box according to another embodiment of the present invention. FIG. 7 is a block diagram illustrating main elements of a beacon apparatus according to another embodiment of the present invention. FIG. 8 is a flow diagram illustrating an operation process of a set-top box and a beacon apparatus according to another embodiment of the present invention.

Referring to FIG. 5, the system for providing contents may include the set-top box 200, the at least one terminal device 300, the content server 400, and a beacon apparatus 500.

Contrary to the above-discussed embodiment in which the set-top box 200 having the beacon module 250 emits a beacon signal, this embodiment employs the set-top box 200 that has no beacon module therein and is instead connected to the beacon apparatus 500 which resides at the outside of the set-top box 200.

The set-top box 200 and the beacon apparatus 500 may be connected through a wired or wireless communication network. This network may use wireless communication technique such as, but not limited to, WLAN (Wireless Local Access Network), Wi-Fi, Wibro, Wimax, HSDPA (High Speed Downlink Packet Access), or the like. Alternatively or additionally, depending on system types, the network may use wired communication technique such as Ethernet, xDSL (ADSL, VDSL), HFC (Hybrid Fiber Coaxial cable), FTTC (Fiber To The Curb), FTTH (Fiber To The Home), or the like. Also, in some cases, PAN-type communication including Bluetooth may be used.

Referring to FIG. 6, the set-top box 200 according to this embodiment may include a communication module 220, a memory module 240, and a control module 260.

The communication module 220 may include the first communication module 221 and the second communication module 223.

The first communication module 221 is configured to transmit or receive data to or from the beacon apparatus 500. Particularly, in this embodiment, the first communication module 221 may transmit, to the beacon apparatus 500, information including a content code received from the content server 400 and a control signal for enabling the beacon apparatus 500 to set or change identification information, to be contained in a beacon signal, based on the content code.

The second communication module 223 transmits or receives data to or from the content server 400 through the communication network 100. Since the second communication module 223 in this embodiment is similar with the above-discussed communication module 210 in the previous embodiment, a detailed description will be omitted.

Also, the memory module 240 in this embodiment is similar with the above-discussed memory module 230 in the previous embodiment, so that a detailed description will be omitted.

The control module 260 may be a processor for triggering and operating each element of the set-top box 200.

The control module 260 controls the whole operations of the set-top box 200. Such operations of the step-top box 200 will be described below together with the operations of the beacon apparatus 500 with reference to FIG. 8.

Referring to FIG. 7, the beacon apparatus 500 in this embodiment may include a communication module 510, a memory module 550, and a control module 570.

The communication module 510 may include the first communication module 511 and the second communication module 513. The first communication module 511 is configured to periodically emit a beacon signal that contains identification information which is set or changed by the control module 570. The first communication module 511 may use PAN-type communication including Bluetooth.

The second communication module 513 is configured to transmit or receive data to or from the set-top box 200 and to receive a control signal, a content code, information about an emission time point, information about an emission time span, etc. from the set-top box 200.

In order to transmit or receive data to or from the set-top box 200, the second communication module 513 may use various wired/wireless communication techniques, especially PAN-type communication.

Namely, the first and second communication modules 511 and 513 may be configured to use the same communication technique or different communication techniques.

The memory module 550 is a device for storing data and includes a main memory unit and an auxiliary memory unit. Further, the memory module 550 stores a program required for the operation of the beacon apparatus 500. The memory module 550 may include mainly a program region and a data region. When any function is activated in response to a user's request, the beacon apparatus 500 executes a relevant application and offers a particular function under the control of the control module 570.

The control module 570 may be a processor for triggering and operating each element of the beacon apparatus 500.

The control module 570 controls the whole operations of the beacon apparatus 500.

Now, operations of the step-top box 200 and the beacon apparatus 500 will be described with reference to FIG. 8. These operations are controlled by the respective control modules 260 and 570.

The set-top box 200 receives a content code, emission time point information, and/or emission time span information from the content server 400 through the communication network 100 (step S201). The emission time point information and the emission time span information may be contained in the content code.

Then the set-top box 200 may transmit, to the beacon apparatus 500, the received information or a control signal for setting identification information on the basis of the received information (step S203).

The beacon apparatus 500 that receives the control signal or information such as the content code may change, based on the received signal or information, the identification information contained in a beacon signal (step S205) and then transmit the beacon signal periodically (step S207).

The beacon apparatus 500 may determine whether an emission time span contained in the emission time span information elapses (step S209). If the emission time span elapses, the beacon apparatus 500 may stop the emission of the beacon signal. If the emission time span does not elapse, the beacon apparatus 500 may continuously and periodically emit the beacon signal.

The identification information changed by the beacon apparatus 500 may be the second identification information 1300 or 2400 as discussed earlier in the previous embodiment. The first identification information 1200 or 2100 may include information about a location or region of the set-top box 200 or the beacon apparatus 500 and/or user information about the user of the set-top box 200 or the beacon apparatus 500.

In this embodiment, as discussed earlier in the previous embodiment, the content code may be mapped to a specific URL address. A technique to record this URL address in the data structure of the beacon signal is as discussed above with reference to FIGS. 4A and 4B.

Described heretofore is the content provision system according to another embodiment of this invention.

Now, main elements and an operation process of the terminal device 300 according to an embodiment of this invention will be described. The terminal device 300 to be described hereinafter may be favorably applied to all the above-discussed embodiments.

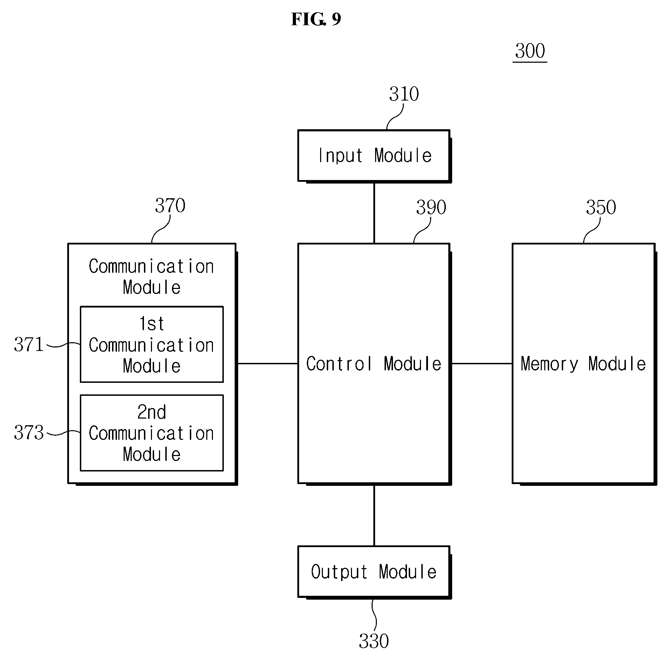

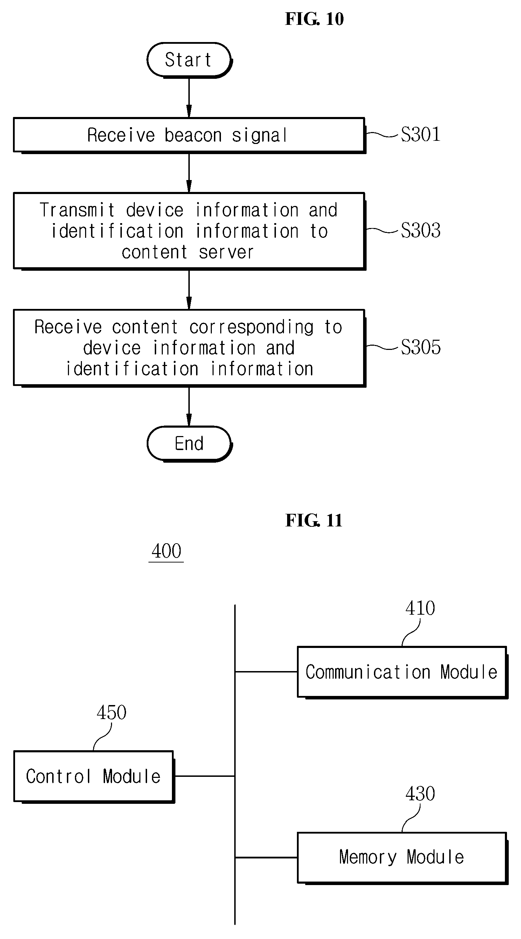

FIG. 9 is a block diagram illustrating main elements of a terminal apparatus according to an embodiment of the present invention. FIG. 10 is a flow diagram illustrating an operation process of a terminal apparatus according to an embodiment of the present invention.

Referring to FIG. 9, the terminal device 300 may include an input module 310, an output module 330, a memory module 350, a communication module 370, and a control module 390.

The input module 310 is configured to receive user's manipulation for entering various kinds of information and setting or controlling various functions of the terminal device 300, to create a corresponding input signal, and to deliver the input signal to the control module 390. The input module 310 may include a keypad and/or a touch pad. The input module 310 formed of a touch panel may be integrated with the output module 330 formed of a display panel to constitute a touch screen. The input module 310 may use various input mechanisms such as a keyboard, a mouse, a joystick, a jog wheel, a touch-sensitive unit, a gesture or image detection unit, a voice recognition unit, and the like. Particularly, the input module 310 detects input information entered by the user and delivers it to the control module 390.

The output module 330 is configured to display information about the state and result of operations generated during the execution of functions of the terminal device 300. Also, the output module 330 may display a menu of the terminal device 300 and user data entered by the user. The output module 330 may be formed of LCD (Liquid Crystal Display), TFT-LCD (Thin Film Transistor LCD), LED (Light Emitting Diode), OLED (Organic LED), AMOLED (Active Matrix OLED), retina display, flexible display, 3-dimensional display, or the like. In case the output module 330 is formed of a touch screen, the output module 330 may perform the whole or parts of functions of the input module 310.

The memory module 350 is a device for storing data and includes a main memory unit and an auxiliary memory unit. Further, the memory module 350 stores a program required for the operation of the terminal device 300. The memory module 350 may include mainly a program region and a data region. When any function is activated in response to a user's request, the terminal device 300 executes a relevant application and offers a particular function under the control of the control module 390.

The communication module 370 is configured to transmit or receive data to or from the content server 400 through the communication network 100. Particularly, the communication module 370 may receive a signal transmitted periodically at the set-top box 200 or the beacon apparatus 500.

The communication module 370 may include an RF transmitter which up-converts the frequency of an outgoing signal and then amplifies the signal, an RF receiver which amplifies with low-noise an incoming signal and down-converts the frequency of the signal, a data processor for processing a communication protocol based on a specific communication scheme, and the like. The communication module 370 may include at least one wireless communication module (not shown) and/or at least one wired communication module (not shown).

The wireless communication module may be configured for transmission and reception based on a particular wireless communication scheme. In case of using wireless communication, the terminal device 300 may transmit or receive data to or from the content server 400 by using one of a wireless network communication module, a WLAN communication module, and a WPAN communication module.

The communication module 370 includes the first communication module 371 and the second communication module 373.

The first communication module 371 receives a signal transmitted from the set-top box 200 or the beacon apparatus 500. The first communication module 371 may perform PAN-type communication including Bluetooth.

The second communication module 373 communicates with the content server 400 through the communication network 100. The second communication module 373 may use wireless communication technique such as, but not limited to, WLAN (Wireless Local Access Network), Wi-Fi, Wibro, Wimax, HSDPA (High Speed Downlink Packet Access), or the like.

The control module 390 may be a processor for triggering and operating each element of the terminal device 300 and an operation system.

For example, the control module 390 may control the communication module 370 to transmit a signal entered through the input module 310 to the content server 400, control the output module 330 to output content received from the content server 400 through the communication module 370, and control the memory module 350 to store such information and/or data.

Now, operations of the terminal device 300 will be described with reference to FIG. 10. These operations are controlled by the control module 390.

The terminal device 300 receives a beacon signal from the beacon apparatus 500 or the set-top box 200 (step S301).

Then the terminal device 300 transmits identification information contained in the received beacon signal to the content server 400 (step S303). At this time, the identification information may include the first identification information and the second identification information. At this step, the terminal device 300 may further device information thereof to the content server 400. Namely, the terminal device 300 may transmit at least one of device information and identification information to the content server 400.

The terminal device 300 receives, from the content server 400, specific content corresponding to the transmitted information (step S305). Then the terminal device 300 may offer the received content to the user through the output module 330.

Described heretofore is the terminal device 300 according to an embodiment of this invention.

Now, main elements and an operation process of the content server 400 according to an embodiment of this invention will be described.

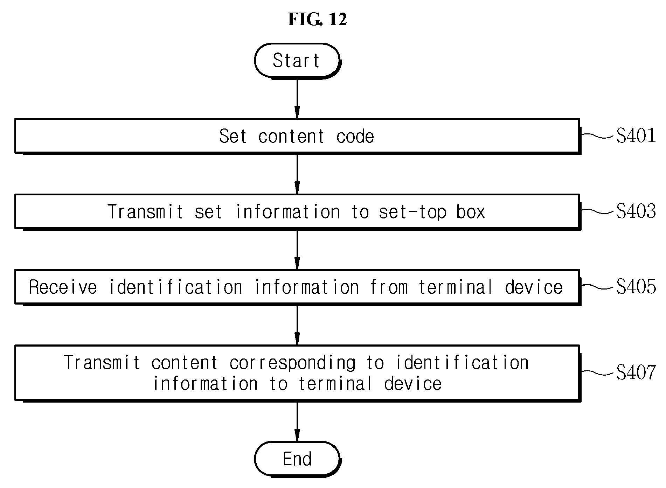

FIG. 11 is a block diagram illustrating main elements of a content server according to an embodiment of the present invention. FIG. 12 is a flow diagram illustrating an operating process of a content server according to an embodiment of the present invention.

Referring to FIG. 11, the content server 400 may include a communication module 410, a memory module 430, and a control module 450.

The communication module 410 is configured to communicate with the set-top box 200 and the terminal device 300. The network for the communication module 410 may use wireless communication technique such as, but not limited to, WLAN (Wireless Local Access Network), Wi-Fi, Wibro, Wimax, HSDPA (High Speed Downlink Packet Access), or the like. Alternatively or additionally, depending on system types, the network may use wired communication technique such as Ethernet, xDSL (ADSL, VDSL), HFC (Hybrid Fiber Coaxial cable), FTTC (Fiber To The Curb), FTTH (Fiber To The Home), or the like.

Particularly, the communication module 410 may receive at least one of identification information and device information from the terminal device 300 through the communication network 100, transmit corresponding content to the terminal device 300, and transmit a content code, emission time point information, and/or emission time span information to the set-top box 200.

The memory module 430 is a device for storing data and includes a main memory unit and an auxiliary memory unit. Further, the memory module 430 stores a program required for the operation of the content server 400. The memory module 430 may include mainly a program region and a data region. When any function is activated in response to a user's request, the content server 400 executes a relevant application and offers a particular function under the control of the control module 450.

Particularly, the memory module 430 may store content corresponding to at least one of the device information and the identification information and also store a content code corresponding to the content and URL address information mapped to the content code.

The control module 450 may be a processor for triggering and operating each element of the content server 400 and an operation system. Also, the control module 450 controls the whole operations of the content server 400.

Now, operations of the content server 400 will be described with reference to FIG. 12. These operations are controlled by the control module 450.

The content server 400 sets a content code by mapping it to emission time point information, emission time span information, and/or a broadcast program (step S401).

Mapping information of the content code may be stored in the memory module 430. Table 1 shows an example of the mapping information of the content code stored in the memory module 430.

**[Table 1]**

| Broadcast Program | Emission Time Point | Emission Time Span | Content Code |
|---|---|---|---|
| A | 5 min 32 sec | 1 min | 1000 |
| | 10 min 40 sec | 30 sec | 1001 |
| | 25 min 12 sec | 1 min | 1002 |
| B | 17 min 3 sec | 2 min | 2000 |

Then the content server 400 transmits the above setting information to the set-top box 200 (step S403) and receives identification information from the terminal device 300 that receives a beacon signal (step S405). At this time, from the terminal device 300, the content server 400 may further receive device information about the terminal device 300.

Then the content server 400 selects specific content corresponding to the received identification information and transmits the selected content to the terminal device 300 (step S407). In order to select specific content, the content server 400 may further consider the received device information. Considering the device information, the content server 400 may offer personalized content to the user of the terminal device 300. Additionally or alternatively, the content server 400 may further consider user information, contained in the identification information, of the set-top box 200 so as to select and offer personalized content.

When selecting content corresponding to the identification information, mapping information between the content code and the content may be used. Table 2 shows an example of such mapping information.

**[Table 2]**

| Content Code | Content |
|---|---|
| 1000 | Video URL |
| 1001 | Webpage URL |
| 1002 | Image URL |
| 2000 | Webpage URL |

Described heretofore is the content server 400 according to an embodiment of this invention.

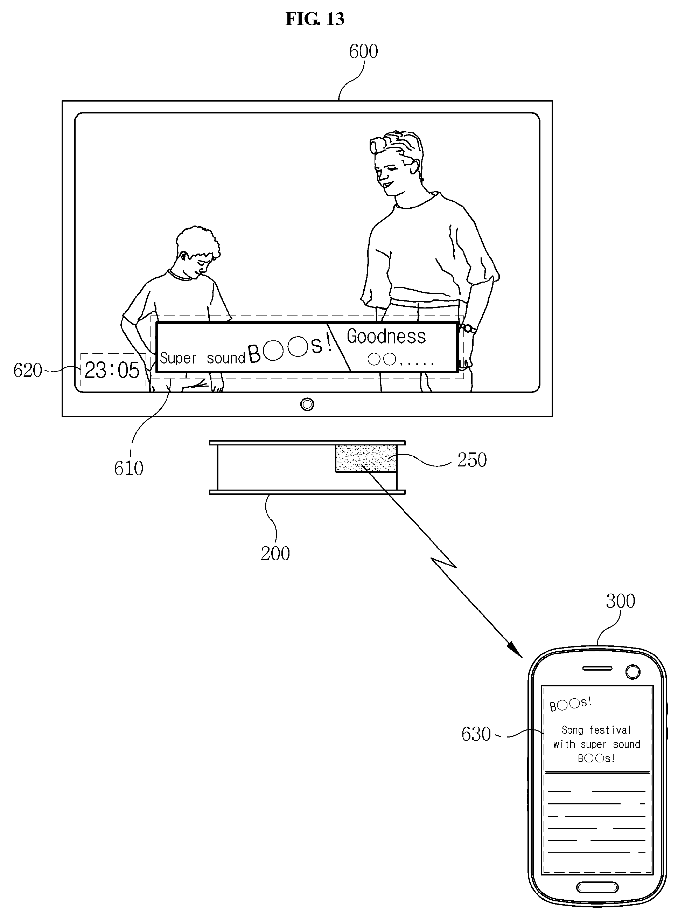

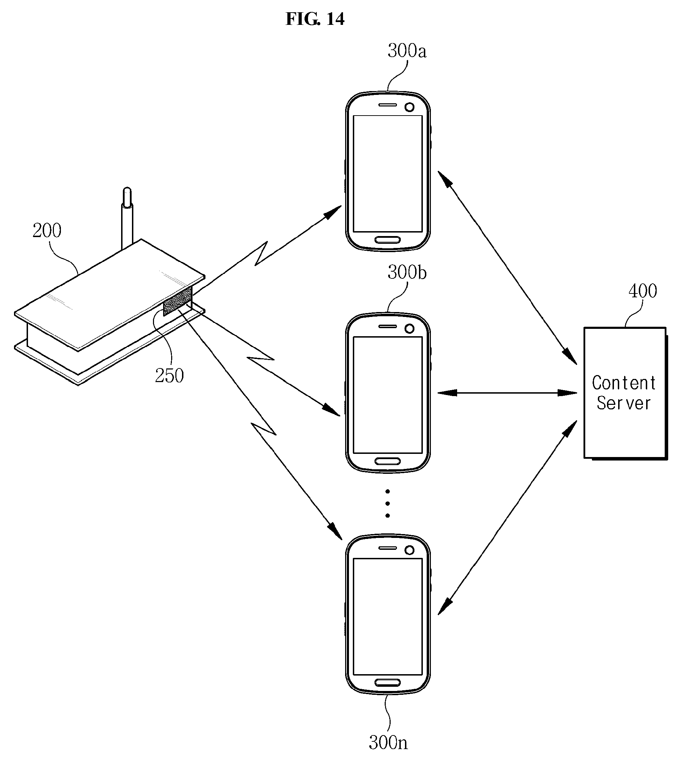

Now, a method for providing content according to embodiments of this invention will be described with reference to FIGS. 13 and 14.

FIG. 13 is an exemplary diagram illustrating a content provision method according to an embodiment of the present invention.

Referring to FIG. 13, the set-top box 200 receives, from the content server 400, a content code corresponding to a specific broadcast program, being currently offered at the TV 600, and a specific emission time point 620.

The content code may be received not only at the specific emission time point 620 but also at any time before the specific emission time point 620.

The set-top box 200 sets, based on the received content code, identification information contained in a beacon signal to be emitted. Then, at the specific emission time point 620, the set-top box 200 emits the beacon signal containing the identification information through the beacon module 250 or the beacon apparatus 500 for a certain time span mapped to the content code.

When setting the identification information, the set-top box 200 may further consider user information about the user of the set-top box 200.

For example, if the emission time point is 23 minutes and 5 seconds, and if the emission time span is 1 minute, the set-top box 200 that receives the content code may emit the beacon signal for one minute from 23:05 to 24:05.

The terminal device 300 that receives the beacon signal from the set-top box 200 may transmit the received identification information to the content server 400. At this time, the terminal device 300 may further send device information thereof to the content server 400.

The content server 400 that receives the identification information and the device information from the terminal device 300 transmits specific content corresponding to the received identification information and device information to the terminal device 300 and exposes the content to the user through the terminal device 300.

The content code may be mapped to a specific URL address so as to expose content contained in the specific URL address to the user of the terminal device 300.

For example, if any content mapped to the emission time point 620 is an advertisement 630 associated with a particular item 610 exposed at the time point, the advertisement 630 may be exposed to the user of the terminal device 300.

FIG. 14 exemplarily shows that a plurality of terminal devices 300a ∼ 300n receive a bacon signal from the beacon module 250 of the set-top box 200 or from the beacon apparatus 400.

Referring to FIG. 14, when the set-top box 200 emits a beacon signal that contains identification information which is set based on a content code received from the content server 400, the plurality of terminal devices 300a ∼ 300n which reside within the range of emission can receive the beacon signal. Therefore, all of such terminal devices 300a ∼ 300n can receive, from the content server 400, content corresponding to the identification information contained in the beacon signal.

This removes a need of any authentication procedure, such as pairing or bonding, required for interconnection between devices when the terminal device 300 receives a beacon signal. Therefore, the beacon signal can be easily offered to the terminal devices 300a ∼ 300n, so that contents can be simultaneously exposed to many users. This may promote an effective consumption of contents.

Meanwhile, if two or more terminal devices 300a ∼ 300n that receive the beacon signal transmit the received identification information to the content server 400, such terminal devices may receive and expose the same content. However, if device information about each terminal device is transmitted together with the identification information to the content server 400, customized contents for users of the respective terminal devices may be offered. Namely, by sending both the device information and the identification information to the content server 400, the content server 400 may offer different contents to respective individual users.

Described heretofore is the content provision method according to embodiments of this invention.

Now, an operating environment of the content provision system according to an embodiment of this invention will be described.

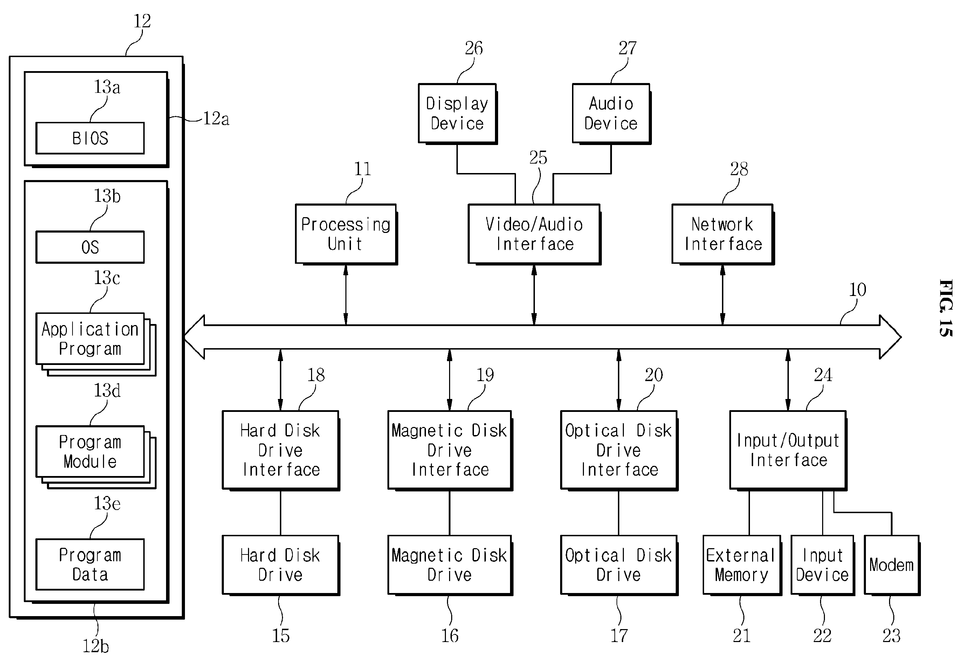

FIG. 15 is a block diagram illustrating an operating environment of a content provision system according to an embodiment of the present invention.

FIG. 15 and the following discussion are intended to provide a brief, general description of an example suitable computing environment in which the invention may be implemented. Although not required (e.g., when implemented in hardware), the invention will be described in the general context of computer-executable instructions, such as program modules, being executed by computer systems.

Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

Referring to FIG. 15, an exemplary computing system for implementing the invention includes a processing unit 11, a system memory 12, and a system bus 10 that couples various system components including the system memory 12 to the processing unit 11.

The processing unit 11 can execute computer-executable instructions designed to implement features of this invention.

The system bus 10 may be any of several, types of bus structures including a memory bus or memory controller, a peripheral bus, and a local bus using any of a variety of bus architectures. The system memory 12 includes read only memory (ROM) 12a and random access memory (RAM) 12b.

A basic input/output system (BIOS) 13a, containing the basic routines that help transfer information between elements within computer system, such as during start-up, may be stored in the ROM 12a.

The computing system may also include a storage unit, e.g., a hard disk drive 15 for reading from and writing to a hard disk, a magnetic disk drive 16 for reading from or writing to a magnetic disk, and an optical disk drive 17 for reading from or writing to an optical disk such as a CD-ROM or other optical media.

The hard disk drive 15, the magnetic disk drive 16, and the optical disk drive 17 are connected to the system bus 10 by a hard disk drive interface 18, a magnetic disk drive-interface 19, and an optical drive interface 20, respectively.

Additionally, the computing system may further include an external memory 21 as the storage unit. The external memory 21 may be connected to the system bus 10 through an input/output interface 24.

The drives and their associated computer-readable media provide nonvolatile storage of computer-executable instructions, data structures, program modules, and other data for the computing system.

Although the example environment described herein employs the hard disk 15, the magnetic disk 16 and the optical disk 17, other types of computer readable media for storing data can be used, including magnetic cassettes, flash memory cards, digital versatile disks, Bernoulli cartridges, RAMs, ROMs, and the like.

Program code means including one or more program modules, such as an operating system 13b, one or more application programs 13c, other program modules 13d, and program data 13e, may be stored on the hard disk 15, the magnetic disk 16, the optical disk 17, the ROM 12a, or the RAM 12b.

A user may enter commands and information into the computing system through other input device 22 such as a keyboard, a pointing device, a microphone, a joy stick, a game pad, or the like. This other input device 22 can be connected to the processing unit 11 through the input/output interface 24 coupled to the system bus 10. The input/output interface 24 may logically represent any of a wide variety of different interfaces, such as, for example, a serial port interface, a PS/2 interface, a parallel port interface, a universal serial bus (USB) interface, or an institute of electrical and electronics engineers (IEEE) 1394 interface (i.e., a FireWire interface), or may even logically represent a combination of different interfaces.

Additionally, the computing system may further include a display device 26 such as a monitor or LCD and/or an audio device 27 such as a speaker or a microphone, which are connected to the system bus 10 via a video/audio interface 25. The video/audio interface 25 may include high definition multimedia interface (HDMI), graphics device interface (GDI), or the like.

The computing system is connectable to networks, such as, for example, an office-wide or enterprise-wide computer network, a home network, an intranet, and/or the Internet. The computing system can exchange data with external sources, such as, for example, remote computer systems, remote applications, and/or remote databases over such networks.

The computing system includes a network interface 28, through which the computing system receives data from external sources and/or transmits data to external sources. The network interface 28 facilitates the exchange of data with remote devices. For example, if the computing system is the terminal device 300, the terminal device 300 may transmit or receive information to or from the content server 400 through the network interface 28. If the computing system is the content server 400, the content server 400 may transmit or receive information to or from the set-top box 200 and the terminal device 300 through the network interface 28. The network interface 28 can logically represent one or more software and/or hardware modules, such as, for example, a network interface card and corresponding network driver interface specification (NDIS) stack.

Likewise, the computing system receives and/or transmits data from and/or to external sources through the input/output interface 24. The input/output interface 24 is coupled to a modem 23 (e.g., a standard modem, a cable modem, or a digital subscriber line (DSL) modem), through which the computing system receives data from and/or transmits data to external sources.

While FIG. 15 represents a suitable operating environment for the present invention, the principles of the present invention may be employed in any system that is capable of, with suitable modification if necessary, implementing the principles of the present invention.

The environment illustrated in FIG. 15 is illustrative only and by no means represents even a small portion of the wide variety of environments in which the principles of the present invention may be implemented.

Various kinds of information generated during the execution of a beacon-based payment service at the beacon service system of this invention may be stored and accessed from any of the computer-readable media associated with the computing system as shown in FIG. 15. For example, portions of such modules and portions of associated program data may be included in the operating system 13b, the application programs 13c, the program modules 13d and/or the program data 13e, for storage in the system memory 12.

When a mass storage device such as the hard disk is coupled to the computing system, such modules and associated program data may also be stored in the mass storage device. In a networked environment, program modules depicted relative to the computing system, or portions thereof, can be stored in a remote computer system connected through the modem 23 or network interface 25 of the input/output interface 24. Execution of such modules may be performed in a distributed environment as previously described.

While the specification contains many specific implementation details, these should not be construed as limitations on the scope of any disclosure or of what may be claimed, but rather as descriptions of features that may be specific to particular embodiments of particular disclosures. Certain features that are described in the specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Also, although the present specifications describe that operations are performed in a predetermined order with reference to a drawing, it should not be construed that the operations are required to be performed sequentially or in the predetermined order, which is illustrated to obtain a preferable result, or that all of the illustrated operations are required to be performed. In some cases, multi-tasking and parallel processing may be advantageous. Also, it should not be construed that the division of various system components are required in all types of implementation. It should be understood that the described program components and systems are generally integrated as a single software product or packaged into a multiple-software product.

While this disclosure has been particularly shown and described with reference to an exemplary embodiment thereof, it will be understood by those skilled in the art that various changes in form and details may be made therein without departing from the scope of this disclosure as defined by the appended claims.

The present invention can be applied to a beacon-based service field and a digital contents field. Accordingly, this invention has a good possibility of sales on the market or business and also has industrial applicability suitable for practical and apparent implementation.

## Claims

1. A method for providing contents, the method comprising steps of:
at a set-top box, receiving a content code corresponding to a specific broadcast program and a specific beacon signal emission time point from a content server;
setting identification information based on the content code; and
emitting a beacon signal containing the identification information at the specific beacon signal emission time point.

2. The method of claim 1, wherein the identification information includes first identification information for indicating a location or region of the set-top box and second identification information for indicating a service to be provided at the location or region, and
wherein the setting step includes setting the second identification information.

3. The method of claim 1, wherein the content code includes emission time span information for indicating an emission time span of the beacon signal, and
wherein the emitting step includes emitting the beacon signal during the emission time span.

4. The method of claim 1, wherein the identification information includes at least one of location information of the set-top box and user information of a user of the set-top box.

5. The method of claim 4, wherein the identification information includes first identification information for indicating a location or region of the set-top box and second identification information for indicating a service to be provided at the location or region, and
wherein the location information and the user information are set in the first identification information.

6. The method of claim 1, wherein the content code is mapped to a specific URL (Uniform Resource Locator) address.

7. A computer-readable storage medium recording thereon a program for executing the method of claim 1.

8. A set-top box comprising:
a beacon module configured to emit a beacon signal;
a communication module connected to a communication network and configured to transmit or receive data to or from a content server through the communication network; and
a control module configured to receive a content code corresponding to a specific broadcast program and a specific beacon signal emission time point from the content server through the communication module, to set identification information based on the content code, and to control the beacon module to emit a beacon signal containing the identification information at the specific beacon signal emission time point.

9. The set-top box of claim 8, wherein the identification information includes first identification information for indicating a location or region of the set-top box and second identification information for indicating a service to be provided at the location or region, and
wherein the control module is further configured to set the second identification information based on the content code.

10. The set-top box of claim 8, wherein the content code includes emission time span information for indicating an emission time span of the beacon signal, and
wherein the control module is further configured to control the beacon module to emit the beacon signal during the emission time span.

11. The set-top box of claim 8, wherein the identification information includes at least one of location information of the set-top box and user information of a user of the set-top box.

12. The set-top box of claim 11, wherein the identification information includes first identification information for indicating a location or region of the set-top box and second identification information for indicating a service to be provided at the location or region, and
wherein the control module is further configured to set the location information and the user information in the first identification information.

13. The set-top box of claim 8, wherein the content code is mapped to a specific URL (Uniform Resource Locator) address.

14. A beacon apparatus comprising:
a first communication module configured to emit a beacon signal;
a second communication module connected to a communication network and configured to transmit or receive data to or from a set-top box through the communication network; and
a control module configured to receive a control signal for setting identification information based on a content code from the set-top box through the second communication module, to set the identification information based on the control signal, and to control the first communication module to emit a beacon signal containing the identification information at a specific beacon signal emission time point.

15. The beacon apparatus of claim 14, wherein the content code includes emission time span information for indicating an emission time span of the beacon signal, and
wherein the control module is further configured to control the first communication module to emit the beacon signal during the emission time span.
